# FASCICULE DE BREVET EUROPEEN

(11) **EP 4 150 574 B1**
(45) Date de publication et mention de la délivrance du brevet: **15.05.2024**
(21) Numéro de dépôt: 22727311.7
(22) Date de dépôt: 04.05.2022
(51) Int. Cl.: G06T 7/11, G06T 7/174

(54) **PROCÉDÉ DE TRAITEMENT D'IMAGES**
VERFAHREN ZUR VERARBEITUNG VON BILDERN
METHOD FOR PROCESSING IMAGES

(30) Priorité: 05.05.2021 BE 202105362
(43) Date de publication de la demande: 22.03.2023
(73) Titulaire: P³Lab, 1341 Ceroux-Mousty (BE)
(72) Inventeur: DAYE, Pierre Martin Jack Gérard, 1420 Braine-l'alleud (BE)
(74) Mandataire: Gevers Patents
(86) Numéro de dépôt international: PCT/EP2022/062055
(87) Numéro de publication internationale: WO 2022/233977

(56) Documents cités:
- EP-A1- 2 455 916
- TERENCE BROUNS: "Robust Video-Based Eye Tracking Using Recursive Estimation of Pupil Characteristics", ARXIV.ORG, CORNELL UNIVERSITY LIBRARY, 201 OLIN LIBRARY CORNELL UNIVERSITY ITHACA, NY 14853, 26 juin 2017 (2017-06-26), XP080772452,
- EHRET THIBAUD ET AL: "Non-Local Kalman: A Recursive Video Denoising Algorithm", 2018 25TH IEEE INTERNATIONAL CONFERENCE ON IMAGE PROCESSING (ICIP), IEEE, 7 octobre 2018 (2018-10-07), pages 3204-3208, XP033454992, DOI: 10.1109/ICIP.2018.8451421
- Ziliani Francesco ET AL: "KALMAN FILTERING MOTION PREDICTION FOR RECURSIVE SPATIO-TEMPORAL SEGMENTATION AND OBJECT TRACKING", , 1 January 1997 (1997-01-01), pages 1-6, XP093044789, Retrieved from the Internet: URL:https://citeseerx.ist.psu.edu/document ?repid=rep1&type=pdf&doi=8117b77bfe80a0a9a 1c361093df5a572d67c6718 [retrieved on 2023-05-05]

## Description

### Domaine technique

La présente invention concerne un procédé de traitement d'images.

### Art antérieur

Il est connu d'étudier des images et leurs transformations afin d'en extraire des informations. Ces études sont généralement effectuées par des procédés de traitement d'images de nature informatique et/ou mathématique à diverses fins.

Par exemple, de tels procédés peuvent être utilisés dans des méthodes de reconnaissance et de suivi faciale. Celles-ci sont toutefois complexes à mettre en oeuvre pour suivre des parties du corps dont les mouvements peuvent être très rapides ou difficiles à appréhender, par exemple, un oeil. Dans ce cas, le résultat du suivi est assez peu précis. De plus, le traitement individuel des images ralentit considérablement l'exécution de telles méthodes.

Afin de résoudre ce problème dans le contexte technique d'un suivi oculaire, la prépublication arXiv 1706.08189 divulgue une méthode de détection de pupille dans une séquence d'images à partir d'estimations récursives de caractéristiques de la pupille sur la séquence d'images. L'efficacité de cette méthode peut toutefois être améliorée.

La publication « *Kalman Filtering Motion Prediction For Recursive Spatio-Temporal SegmentationAnd Object Tracking* » de Ziliani F. et Moscheni F., XP093044789, divulgue une méthode de prédiction de mouvements d'objets composant une séquence vidéo, basée sur une filtration de Kalman.

### Exposé de l'invention

Un objet de l'invention est de fournir un procédé de traitement d'images qui soit rapide, fiable et efficace, tirant pleinement profit des avancées algorithmiques actuelles.

À cet effet, la présente invention propose un procédé de traitement selon la revendication 1.

Grâce au procédé selon l'invention, il est ainsi rendu possible de traiter plus rapidement et plus efficacement une séquence d'images au moyen des fonctions de traitement d'images. En effet, ces fonctions sont déterminées récursivement sur la séquence d'images, et donc déduite les unes des autres. Ceci permet d'éviter un traitement individuel des images, et donc un temps d'exécution du procédé plus long, et ce notamment au regard de l'exposé de la prépublication susmentionnée. Cet avantage est en outre accru étant donné que les fonctions de traitement des images sont déterminées à partir de la séquence d'estimations (qui peut elle-même être déterminée récursivement ou non), constituant ainsi une étape intermédiaire plus simple à exécuter que le traitement direct des images. Moins de calculs sont ainsi nécessaires car la détermination d'une fonction de traitement s'apparente à l'ajustement d'un résidu par rapport à l'estimation de cette fonction de traitement. L'aspect récursif du procédé accroit également la fiabilité de la détermination des fonctions de traitement d'images car celle-ci ne repose alors pas uniquement sur la séquence d'estimations mais aussi sur les fonctions déjà déterminées.

Ce procédé est davantage adapté à des méthodes de suivi difficile à mettre en oeuvre tel qu'un suivi oculaire, comme il sera introduit ci-après.

Le terme « fonction de traitement d'images » (plus simplement « fonction ») fait préférentiellement référence à une fonction définie sur les pixels des images et prenant comme valeurs un modèle, et/ou une structure, et/ou une caractéristique correspondant aux pixels des images. Par exemple, lorsqu'un modèle 2D (par exemple, une courbe, une forme géométrique, ...) et/ou 3D (par exemple, un volume, une (donnée d') orientation, une position, ...) associé à une telle fonction de traitement peut être mis en évidence au niveau de pixels d'une première image de la séquence (de façon algorithmique ou manuelle), le procédé selon l'invention permet d'intégrer de façon avantageuse et récursive ce modèle sur les autres images de la séquence pour suivre son évolution et/ou le détecter efficacement et rapidement, sans traiter chaque image indépendamment. Ainsi, par exemple, et de préférence, la fonction de traitement d'images associe un modèle et/ou une structure à une collection de pixels des images (c'est-à-dire, les pixels ayant une image « non nulle » (ou non constante) par la fonction).

Une telle structure correspond à une segmentation des images, de telle sorte que la fonction de traitement d'images définit une segmentation des images. La segmentation en tant que telle est un procédé réputé connue d'un homme du métier. Elle peut être de tout type connu. Elle peut, par exemple, être fondée sur des régions et/ou des contours au niveau des images de la séquence, et/ou aussi sur un classement des pixels par intensité (par exemple, lumineuse, de niveau de gris, etc.). Cette segmentation peut être attachée à une distribution de probabilité de segmentation intégrée directement dans la définition des fonctions de traitement des images. Compte tenu du grand nombre de fonctions de traitement d'images susceptibles d'être prises en compte par le procédé selon l'invention, ce procédé permet un grand nombre d'applications de traitement d'images.

Dans le cadre de ce document, tel qu'il est connu d'un homme du métier, la détermination d'une « estimation » d'une fonction de traitement est la détermination de cette fonction de façon approximative, c'est-à-dire comprenant un résidu d'écart avec la fonction réelle en question. En particulier, la fonction et l'estimation associée sont typiquement même type et de même nature.

De par l'usage des termes « mis en oeuvre par ordinateur », le procédé de l'invention implique l'utilisation d'un ordinateur, d'un réseau informatique et/ou de n'importe quel autre appareil programmable (par exemple, un smartphone, une tablette, un FPGA, ...) ou programmé (par exemple, un circuit intégré / ASIC, ...). En particulier, le terme « ordinateur » ne peut être interprété de façon restrictive. Les étapes de détermination relèvent donc au moins partiellement d'un caractère informatique sous-jacent. Par exemple, une ou plusieurs de ces étapes peuvent constituer en une détermination par calcul algorithmique.

L'usage du terme « séquence d'images » implique de lui-même une notion d'ordre entre les images. Toutefois, le procédé n'est pas dépendant d'un ordre qui aurait été attaché antérieurement aux images. Par exemple, l'ordre considéré dans le procédé n'est pas nécessairement celui dans lequel les images sont capturées. Ainsi, le procédé peut très bien est précédé d'une étape d'établissement d'un ordre entre les images afin de former la séquence. Le procédé peut aussi très bien être exécuté récursivement dans l'ordre inverse de capture des images, de sorte que la séquence considérée serait cet ordre inverse. Ces considérations sont toutefois annexes à l'invention, l'essentiel étant, qu'à un moment, une séquence d'images soit utilisée en entrée du procédé, celle-ci étant généralement et préférentiellement obtenue par la capture des images, dans leur ordre de capture. Ainsi, la séquence d'images forme par exemple une suite d'images dans le temps, représentant, par exemple, un mouvement d'une partie d'un corps humain, par exemple, d'un oeil. Alternativement, la séquence peut également former une suite spatiale d'images capturées à des positions adjacentes (par exemple, par scan CT ou scan CBCT), et/ou une suite spatio-temporelle d'images (par exemple, capturées par scan CT 4D).

Tel qu'il est connu d'un homme du métier, et comme explicité dans l'énoncé du procédé, la récursivité de l'étape (ii) est attachée à cet ordre entre les images. En particulier, la fonction de traitement d'une image qui est au moins deuxième dans la séquence est déterminée à partir de la séquence d'estimations, de façon préférée, à partir de son estimation, mais également de façon récursive sur au moins une des fonctions déjà déterminées. Cette fonction est de préférence la précédente dans la séquence. Le procédé selon l'invention n'est pas cependant pas limité à cette forme de récursivité. Ainsi, par exemple, la fonction de traitement de la nième image dans la séquence peut être déterminée sur base de celle de la n-1 ième, et/ou de la n-2 ième, et/ou de la n-3 ième et/ou ..., ou sur base de toutes les fonctions de traitement d'images déjà déterminées ou connues d'une façon ou d'une autre. Le terme « récursivement » peut donc aussi être interprété comme référant à un caractère inductif général sur les fonctions de traitement d'images.

La mention des étapes (i) et (ii) ne doit pas être interprétée comme faisant nécessairement référence à un ordre d'exécution des étapes. En particulier, les étapes (i) et (ii) sont de préférence exécutée de façon alternée et/ou simultanée et/ou en parallèle sur les images la séquence. Ainsi, par exemple, selon un mode de réalisation particulier de l'invention, les étapes (i) et (ii) sont préférentiellement implémentés sous la forme des sous-étapes suivantes, et dans cet ordre :
(0) déterminer ou fournir la fonction de traitement d'une première des images de la séquence d'images ;
(1i) déterminer l'estimation de la fonction de traitement d'une deuxième des images de la séquence à partir de la fonction de traitement de la première image ;
(1 ii) déterminer la fonction de traitement de la deuxième image à partir de la fonction de traitement de la première image et de l'estimation de la fonction de traitement de la deuxième image ;
(n) répéter les étapes (1i) et (1ii) de façon récursive sur la séquence des images pour déterminer successivement :
   - l'estimation de la fonction de traitement d'une image courante de la séquence d'images à partir de la fonction de traitement d'une image précédant dans la séquence d'images ;
   - la fonction de traitement de l'image courante à partir de la fonction de traitement de ladite image précédant dans la séquence d'images et de l'estimation de la fonction de traitement de l'image courante ;
   et ce pour chaque image courante au moins troisième dans la séquence d'images.

Ce mode de réalisation du procédé fait ressortir le caractère récursif de la détermination des fonctions de traitement d'images sur la séquence d'images. L'étape (0) forme le pas initial, et les étapes (1i), (1ii) et (n) forment le pas récursif. Dans ce cas, les estimations des fonctions de traitement d'images sont obtenues de façon successive partir des fonctions de traitement d'images précédant dans la séquence. La fonction de traitement de la première image peut être déterminée algorithmiquement ou simplement fournie d'une autre façon. Ces alternatives sont commentées ci-après au regard de la formulation initiale du procédé, et l'homme du métier comprendra aisément que chaque mode de réalisation ci-après introduit s'applique semblablement à la formulation des étapes (0) à (n).

Le seul membre de la séquence d'estimations utilisé pour déterminer la fonction de traitement d'une image est préférentiellement celle de la fonction de traitement de l'image courante, de sorte qu'il n'est pas nécessaire de connaître et/ou déterminer la séquence d'estimations dans son ensemble pour déterminer une fonction de traitement d'une image. La séquence d'estimations des fonctions de traitement comprend de préférence une estimation de la fonction de traitement de chaque image de la deuxième à la dernière image de la séquence d'images. L'estimation de la fonction de traitement de la première image n'est, par exemple, pas nécessaire selon une exécution des sous-étapes (0) à (n) ci-dessus, vu que cette fonction est directement déterminée ou fournie comme pas initial. De façon générale, la séquence d'estimations peut comprendre une, deux, trois ou plus de membres, relatifs à une, deux, trois ou plus d'images. Par exemple, il peut aussi être envisagé former la séquence d'estimations des fonctions de traitement sur toutes les images à une position multiple d'un nombre dans la séquence.

Selon un autre mode particulier, le procédé selon l'invention comprend, dans cet ordre, les étapes :
(0) déterminer ou fournir la fonction de traitement d'une première des images de la séquence d'images ;
(i') déterminer une séquence d'estimations des fonctions de traitement des deuxième à dernière images de la séquence d'images sur base de la fonction de traitement de la première image ;
(ii') déterminer la fonction de traitement de chaque image de la deuxième à la dernière image de la séquence d'images, récursivement sur la séquence d'images, à partir de la séquence d'estimations.

Ainsi, dans ce cas particulier, l'étape (i') correspondant à l'étape (i) est exécutée complètement avant l'étape (ii'), qui correspond, quant à elle, à l'étape (ii). L'étape (i') peut par exemple être réalisée en appliquant à la fonction de traitement de la première image un déplacement de pixels entre la première image et l'image ainsi considérée, comme il sera introduit ci-après en terme d'« image voisine ». L'étape (i') peut optionnellement aussi être de nature récursive sur la séquence des images.

Comme le montrent les paragraphes qui précède, le procédé de traitement d'images peut donc s'exécuter de différentes façons s'inscrivant pleinement dans le cadre de la présente invention.

Dans le cadre de ce document, les termes « à partir de », « sur base de » et les termes semblables ne doivent pas être interprétés de façon limitative comme « uniquement à partir de », « sur base exclusive de », ... à moins que cela ne soit expressément indiqué. Ces termes se réfèrent généralement à une dépendance directe, de préférence sans étape ou transformation intermédiaire nécessaire. Ils peuvent être substitués de façon équivalente respectivement par « directement à partir de », « directement sur base de », et ainsi de suite.

L'usage, dans ce document, du verbe « comprendre », de ses variantes, et de ses conjugaisons, ne peut en aucune façon exclure la présence d'éléments autres que ceux mentionnés. L'usage, dans ce document, d'un article indéfini tel que « un » ou « une », ou d'un article défini tel que « le », « la » ou « l' », pour introduire un élément n'exclut pas la présence de plusieurs tels éléments.

Selon un mode de réalisation préféré de l'invention, l'estimation de la fonction de traitement d'une image courante de la séquence d'images est déterminée à l'étape (i) à partir de :
- l'image courante ;
- une image voisine
   précédant ou suivant l'image courante dans la séquence d'images et dont la fonction de traitement a été préalablement déterminée ; et
- la fonction de traitement de l'image voisine.

Le terme « image courante » désigne de préférence n'importe quelle image dont la détermination de l'estimation de la fonction de traitement est en cours. De préférence, lorsque la fonction de traitement de la première image de la séquence est déterminée ou fournie dans un pas initial du procédé, l'image courant est parmi les images classées deuxième à dernière de la séquence. Une « image voisine » correspond de préférence à une image précédant directement l'image courante dans la séquence. Par exemple, si l'image courante est la nième, l'image voisine est alors la (n-1)ième, pour n un nombre naturel strictement plus grand que 1. Cette formulation n'exclut cependant pas le cas où l'image voisine considérée ne serait pas directement avant ou après l'image courante dans la séquence. Par exemple, seule une image sur T, pour T un nombre naturel plus grand ou égal à 2, pourrait être considérable comme image voisine. Par exemple, pour T = 2, les estimations des fonctions de traitement des nième et (n+1)ième images pourrait se faire sur base de la même image voisine, la (n-1)ième image en l'occurrence. Un exemple différent d'image voisine qui ne suit pas ou ne précède pas directement l'image courante dans la séquence est le cas où l'image voisine est toujours la première image. Ce cas a d'ailleurs été mentionné précédemment dans le cas où la fonction de traitement de la première image a été déterminée ou obtenue dans un pas initial du procédé. Toutes ces réalisations particulières entrent pleinement dans le cas de la réalisation de l'invention selon ce mode de réalisation préféré.

L'étape (i) comprend de préférence une comparaison entre l'image courante et l'image voisine. Cette comparaison permet alors avantageusement d'estimer la fonction de traitement de l'image courante particulièrement aisément en appliquant et/ou en répercutant le résultat de la comparaison sur la fonction de traitement de l'image voisine qui est connue.

De façon plus préférée, la comparaison comprend (et de préférence consiste en) une détermination d'un champ de vecteurs. Un tel champ de vecteurs est alors préférentiellement basé sur les pixels de l'image courante. Le champ de vecteurs correspond de préférence en un déplacement de pixels entre l'image courante et l'image voisine. Dans ce cas, il encode préférentiellement le déplacement que les pixels devraient subir pour revenir à une position associée à l'image voisine. Ce champ de vecteurs est alors de préférence calculé par flux optique. Le champ de vecteurs peut, alternativement, définir une dérivée de la variation d'intensité pixel par pixel entre l'image courante et l'image voisine.

La donnée du champ de vecteurs est préférentiellement équivalente à la donnée de l'estimation de la fonction de traitement de l'image voisine, de sorte que l'étape (i) du procédé peut correspondre à la donnée d'une collection de champs de vecteurs, chacun correspondant de préférence en un déplacement de pixels entre deux des images de séquence (ou alternativement en la dérivée susdite) Dans ce cas, préférentiellement, cette collection de champ de vecteurs serait alors obtenue par la comparaison des paires d'images classées (n-1, n) ième pour chaque nombre naturel n à partir de 2.

Dans le cas général où la comparaison comprend la détermination du champ de vecteurs, l'estimation de la fonction de traitement de l'image courante est alors de préférence déterminée à l'étape (i) par une composition du champ de vecteurs avec la fonction de traitement de l'image voisine. De façon mathématique, si la fonction de traitement de l'image voisine est notée f et si le champ de vecteurs est noté X et assimilé à un déplacement de pixels d'images, l'estimation de la fonction de traitement de l'image courante en le pixel p est donnée par (f ∘ X)(p).

L'estimation de la fonction de traitement de l'image courante consiste d'une certaine façon en une approximation au premier ordre de cette fonction, de façon semblable à une tangente en un point du graphe d'une fonction réelle à valeurs réelles qui fournit une approximation au premier ordre de la fonction au voisinage du point. De telle approximation sont aisément calculables, ce qui améliore encore l'efficacité et la rapidité d'exécution de la méthode selon l'invention.

Dans le cas de fonctions de traitement d'images associant un modèle et/ou une structure à une collection de pixels des images, par exemple une segmentation d'images d'une partie d'un corps (par exemple, un oeil) aux fins d'un suivi d'une sous-partie de ce corps (par exemple, un limbe de l'œil), ces derniers modes de réalisations permettent de déduire aisément une estimation précise de position de la sous-partie du corps suivre sur chaque image, et de limiter ainsi fortement une zone d'intérêt de l'image sur laquelle identifier la sous-partie du corps à l'étape (ii) du procédé. Cette zone est d'autant plus limitée, et l'estimation fiable, que la sous-partie du corps à suivre est globalement fixe par rapport à la partie du corps entre deux images consécutives, ce qui est en général le cas, par exemple, pour un flux continu d'images vidéo de cette partie corps (par exemple, une vingtaine d'images par secondes), en particulier lorsque celle-ci consiste en un oeil.

L'estimation de la fonction de traitement de l'image courante est déterminée de préférence algorithmiquement à l'étape (i), par exemple via un algorithme du type « démon ». La détermination de l'étape (i) est préférentiellement effectuée au moyen d'un filtre de Kalman. Ceci permet avantageusement d'obtenir un résultat plus précis en peu de temps.

Selon un mode de réalisation préféré de l'invention, une exécution des étapes (i) et (ii) débute par une détermination de la fonction de traitement d'une première image de la séquence d'images à partir de données d'entrées comprenant cette première image. Cette détermination constitue alors un pas initial (0) de l'étape (ii) du procédé tel qu'exposé précédemment. En particulier, la fonction de traitement de la première image peut être déterminée de plus façon, ou simplement fournie comme entrée du procédé sur base de la première image.

Selon un mode de réalisation préféré de l'invention, la fonction de traitement d'une image à traiter qui est au moins deuxième dans la séquence d'images, et dont l'estimation de la fonction de traitement a préalablement été déterminée, est déterminée à l'étape (ii) à partir de (optionnellement « uniquement à partir de ») données d'entrées comprenant :
- l'image à traiter ;
- l'estimation de la fonction de traitement de l'image à traiter ; et
- la fonction de traitement d'une image précédant (de préférence, de façon directe) l'image à traiter dans la séquence d'images.
Ce mode de réalisation constitue alors le pas récursif de l'étape (ii) tel qu'introduit précédemment. En particulier, dans ce cas, la fonction de traitement de l'image à traiter est déterminée à partir de la fonction de traitement de l'image précédente et ce de façon récursive.

De façon avantageuse, la détermination de la fonction de traitement à l'étape (ii) est rendue plus efficace car elle peut être réalisée à partir d'une détermination du résidu subsistant avec son estimation. Les calculs nécessaires à cet effet sont ainsi limités, ce qui permet d'intégrer le procéder dans des systèmes embarqués disposant d'une puissance de calcul limitée.

Le terme « image à traiter » correspond de préférence à l'image courante lorsque ce mode de réalisation est combiné aux précédents modes de réalisation de la détermination de l'estimation de la fonction de traitement de l'image à traiter. L'image voisine de ces modes de réalisation correspond alors préférentiellement à l'image précédant l'image à traiter. Comme mentionné ci-dessus, l'étape (i) n'est toutefois pas limitée à cette image voisine particulière.

Les données d'entrées comprennent préférentiellement tout ou partie des images précédant l'image à traiter dans la séquence d'images. Elles comprennent préférentiellement tout ou partie des fonctions de traitement des images précédant l'image à traiter dans la séquence d'images. Ainsi, l'ensemble de la séquence des images et/ou des fonctions déjà déterminées sont utilisées pour déterminer plus précisément la fonction de traitement de l'image à traiter à l'étape (ii). La méthode est ainsi plus précise et plus robuste compte tenu de la limitation de propagation d'erreur ainsi induit par l'aspect récursif.

La fonction de traitement de l'image à traiter est de préférence déterminée de façon algorithmique à l'étape (ii) à partir des données d'entrées.

Cette réalisation algorithmique est de préférence accomplie au moyen d'un réseau de neurones ayant été développé et entraîné préalablement aux étapes (i) et (ii) pour déterminer la fonction de traitement de l'image à traiter à l'étape (ii) à partir des données d'entrées.

Il en va de préférence également de même pour la fonction de traitement de la première image, de sorte que les données d'entrées comprenant la première image sont fournies au réseau de neurones pour déterminer cette fonction. Ces données d'entrées sont préférentiellement les mêmes pour chaque image, à savoir l'image à traiter, l'estimation de la fonction de traitement de l'image à traiter, et la fonction de traitement de l'image précédant l'image à traiter, de telle sorte que les entrées non disponibles lors de la détermination de la fonction de traitement de la première image sont assimilées à des entrées vides (ou non disponibles), ce sans mettre en péril la bonne exécution de l'algorithme. La fonction de traitement de la première image est dès lors déterminée sur base de moins de données d'entrée, sans pour autant que cela nuise à la précision des fonctions de traitement suivantes compte tenu du caractère récursif de l'étape (ii) et de l'usage exemplatif de filtres de Kalman dans l'exécution de l'étape (i) pour déterminer les estimations de ces fonctions. L'exécution de la méthode est ainsi rendu tout particulièrement efficace et fiable.

L'entraînement du réseau de neurones peut se faire sur base de principes connus d'un homme du métier tel qu'une rétropropagation d'un gradient d'erreurs. Ainsi, par exemple, dans cet entraînement :
- le réseau est initié avec des poids de valeurs aléatoires,
- des données d'entrées initiales, correspondant à une image initiale, sont fournies au réseau de neurones pour déterminer une donnée de sortie qui devrait correspondre à une fonction de traitement de l'image initiale, cette fonction étant par ailleurs connue,
- une erreur entre la fonction connue et la donnée de sortie est calculée et propagée en arrière dans le réseau de neurones,
- les valeurs des poids du réseau de neurones sont mises à jour,
- les trois dernières étapes sont répétées avec d'autres données d'entrée initiales et d'autres fonctions connues correspondantes, pour affiner les valeurs des poids du réseau de façon progressive et itérée.

L'invention propose également une méthode de suivi oculaire bénéficiant des avantages du procédé selon l'invention. La méthode de suivi oculaire comprend les étapes suivantes :
(a) fournir une séquence d'images d'un oeil ;
(b) segmenter les images au moins au voisinage d'une représentation de l'iris de l'œil ;
(c) déterminer une position d'un limbe de l'œil sur base des segmentations des images de l'étape (b) ;
(d) déterminer une position de l'œil sur base de la position du limbe de l'œil déterminé à l'étape (c).
De préférence, l'étape (b) est mise en oeuvre au moyen du procédé selon l'invention pour lequel la fonction de traitement d'images définit une segmentation d'images. Le terme « position » peut être remplacé ci-dessus par le terme « information ou donnée de position ».

La méthode permet d'obtenir un suivi oculaire rapide et précis par rapport aux méthodes connues de l'art antérieur. En effet, la segmentation de chaque image est effectuée au moyen du procédé de traitement d'images de l'invention de sorte que chaque segmentation est déduite d'une estimation de segmentation et d'au moins une des précédentes segmentations de façon récursive, permettant de cette façon d'atteindre une grande précision et une grande rapidité dans l'exécution de cette étape (b). La segmentation d'une image de l'œil au voisinage des pixels associés à l'iris de l'œil permet de mettre en évidence une forme elliptique dans le cas d'une segmentation de contour, correspondant essentiellement au limbe de l'œil, dont la position peut ainsi être avantageusement déduite à l'étape (c) selon les paramètres définissant l'ellipse. L'intérêt de cette méthode réside aussi dans un traitement de données plus rapide et moins lourd des segmentations par rapport aux images.

En outre, la méthode selon l'invention propose de tenir compte en premier lieu du limbe pour déterminer la position de l'œil à l'étape (d), et se distingue ainsi de la plupart des méthodes connues qui se basent sur des données relatives à la pupille pour déterminer la position de l'œil. En effet, la détermination de la position de l'œil par une telle méthode, typiquement en segmentant les images au voisinage des pixels correspondant à la pupille comme dans la prépublication de l'art antérieur, est moins précise que la méthode selon la présente invention. Ceci est dû au fait que la détermination de caractéristiques de position de la pupille par une telle méthode est entachée d'erreurs dues, par exemple, au fait que la vitesse et l'accélération des mouvements oculaires (pouvant atteindre respectivement 600°/s et 35000°/s² pendant les saccades) induit un mouvement relatif entre la pupille et le limbe de l'œil, ou encore au fait que toute tâche noire (par exemple, du mascara) est prise en compte dans les calculs par la plupart des suiveurs oculaires actuels.

Ainsi, la méthode selon l'invention se distingue avantageusement de par la structure des étapes (a) à (d) permettant d'établir une position du limbe de l'œil, mais en outre par l'implémentation avantageuse de l'étape (b) par le procédé de l'invention. En particulier, l'ensemble des modes de réalisation et des avantages du procédé selon l'invention s'étendent naturellement *mutatis mutandis* à l'étape (b) de la méthode de suivi oculaire selon l'invention, et donc à cette méthode.

La rapidité et l'efficacité de la méthode de suivi oculaire la rende en outre particulièrement intéressant pour suivre un oeil sur un flux continu d'images vidéo, ceci constitue un mode de réalisation préféré de la méthode selon l'invention.

La séquence d'images est alors fournie sous forme de ce flux d'images, par exemple, au moyen d'une caméra pointé sur l'œil. Le sujet auquel appartient l'œil est typiquement stimulé à suivre une cible mobile sur un écran, ce qui permet de capturer une séquence d'images de mouvements de l'œil. La méthode de suivi oculaire permet alors une étude des mouvements de l'œil, par exemple, aux fins de détection de maladies neurodégénératives. Une telle méthode peut également être utilisé pour le suivi oculaire des yeux d'un conducteur d'un véhicule afin de détecter un éventuel assoupissement du conducteur et de l'avertir. Les applications de la méthode de suivi oculaire ne sont bien sûr pas limitées à ces exemples.

Selon un mode de réalisation préféré de la méthode, l'étape (c) comprend une détermination d'une caractéristique de position d'une pupille de l'œil sur base des segmentations des images de l'étape (b). Ceci peut notamment être le cas car le voisinage des pixels correspondant à l'iris comprend les pixels correspondant au bord de la pupille, et donc que chaque segmentation permet d'en déduire une telle caractéristique. Celle-ci correspond préférentiellement au contour, à l'aire et/ou au barycentre de la pupille telle que représentée sur l'image considérée.

La position de l'œil est alors préférentiellement déterminée à l'étape (d) sur base de la caractéristique de position de la pupille de l'œil et de la position du limbe de l'œil déterminées à l'étape (c), ce qui permet d'obtenir un suivi oculaire encore plus précis.

Préférentiellement, lorsque le procédé de l'étape (ii) de l'étape (b) est mis en oeuvre au moyen d'un réseau de neurones, la méthode comprend, avant l'étape (b), un procédé d'entraînement du réseau de neurones par rétropropagation d'un gradient d'erreurs au niveau du réseau de neurones (par exemple, de valeurs de poids) sur base d'une séquence d'images tests d'un oeil regardant une cible située à une position prédéterminée sur un écran. En particulier, comme la position de la cible est connue, l'orientation et la position de l'œil l'est également, ce qui permet d'en déduire le résultat qui devrait être obtenu, et donc de calculer les erreurs et de les propager en arrière au sein du réseau de neurones, conformément au procédé d'entraînement tel que décrit précédemment. Ceci forme une réalisation pratique de l'entraînement et de la façon avec laquelle un réseau de neurones effectif peut être obtenu, notamment dans le cadre de la méthode de suivi oculaire.

L'homme du métier comprendra que la méthode de suivi oculaire selon la présente invention ne constitue qu'une application parmi d'autres du procédé de traitement d'images selon l'invention. Par exemple, celui-ci peut également être utilisé à d'autres fins telles que la reconnaissance faciale au sein de programmes d'ordinateur, par exemple dans des filtres de logiciels de vidéo-conférence pour distinguer un visage de son environnement. Le procédé de traitement d'images selon l'invention peut aussi être utilisé aux fins de détection de tumeurs dans des images, par exemple des images radiographiques, via scan CT et/ou CBCT.

L'invention propose également un système (informatique) de traitement de données comprenant des moyens configurés pour mettre en oeuvre le procédé de traitement d'images selon l'un quelconque des modes de réalisation de l'invention. L'invention propose aussi un programme d'ordinateur comprenant des instructions qui, lorsque le programme d'ordinateur est exécuté par un ordinateur, le conduisent à mettre en oeuvre le procédé selon l'un quelconque des modes de réalisation de l'invention. L'invention propose enfin aussi un support (informatique) lisible par un ordinateur, et sur lequel est enregistré le programme d'ordinateur susdit.

Le système de traitement de données comprend, par exemple, au moins un hardware ou matériel informatique parmi :
- un ordinateur muni d'un processeur pour exécuter des algorithmes, de préférence d'une architecture de type PC ou d'une architecture de type embarqué (ARM) ;
- un circuit intégré ASIC spécifique à une application et/ou à un algorithme ;
- un circuit intégré logique FPGA reconfigurable ou reprogrammable après fabrication.

Le système de traitement de données est de préférence un système embarqué. Ce mode de réalisation est avantageusement rendu possible par l'utilisation combinée d'estimations et d'une récursion sur la détermination des fonctions de traitement permettant de réduire le nombre de calculs et la puissance de calcul nécessaires à l'exécution du procédé selon l'invention.

Le support informatique lisible par ordinateur consiste de préférence en au moins un support informatique (ou un ensemble de tels supports) apte à stocker des informations numériques. Il comprend, par exemple, au moins un parmi : une mémoire numérique, un serveur, une clé USB, un ordinateur. Il peut être dans un nuage de données (cloud).

Les modes de réalisation et les avantages du procédé selon l'invention se transposent *mutatis mutandis* au système informatique de traitement de données, au programme d'ordinateur et au support informatique lisible par un ordinateur selon l'invention.

### Brève description des figures

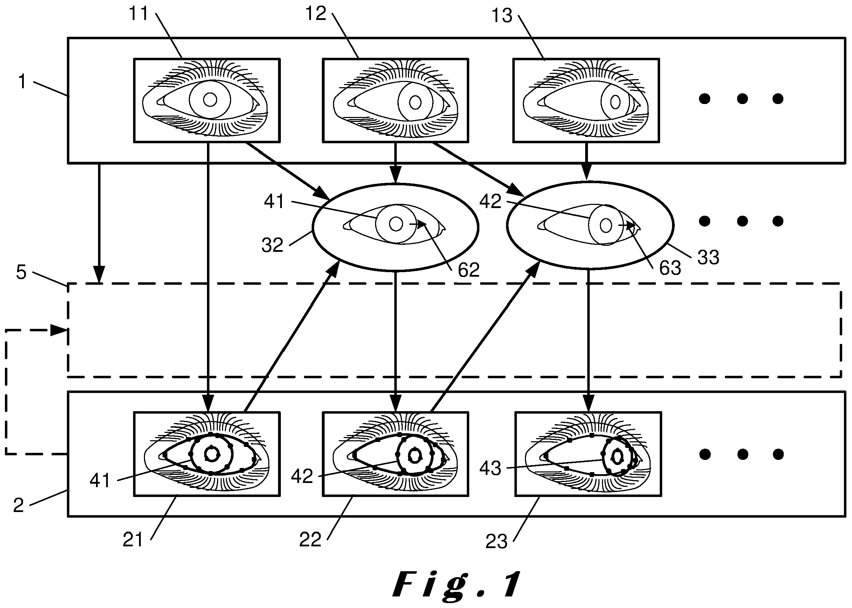

D'autres caractéristiques et avantages de la présente invention apparaîtront à la lecture de la description qui suit pour la compréhension de laquelle, il sera fait référence à la figure 1 représentant un organigramme d'un procédé de traitement d'image selon un mode de réalisation préféré de l'invention.

Les dessins de la figure ne sont pas à l'échelle. Des éléments semblables peuvent être dénotés par des références semblables. Dans le cadre du présent document, les éléments identiques et/ou analogues peuvent porter les mêmes références. La présence de numéros ou lettres de référence aux dessins ne peut être considérée comme limitative, y compris lorsque ces numéros ou lettres sont indiqués dans les revendications.

### Description détaillée d'un mode de réalisation de l'invention

Cette section introduit une description d'un mode de réalisation préféré de la présente invention au regard de la figure 1. Celle-ci est schématique et ne limite pas l'invention. Par abus de notation, les fonctions de traitement d'images seront dénotées comme leurs images sur les pixels de la séquence d'images.

La figure 1 représente l'exécution du procédé selon ce mode de réalisation dans le cas préféré où la fonction de traitement d'images définit une segmentation d'images. Comme exposé précédemment, ce mode de réalisation est avantageux en particulier aux fins de la méthode de suivi oculaire selon l'invention. Afin de mettre en évidence cette application dans la description, la séquence d'images 1 de la figure 1 est constituée d'images 11, 12, 13 successives qui représentent de façon non limitative un oeil en mouvement (du centre vers la droite dans le dessin illustré) et qui sont capturées sous forme d'un flux vidéo d'une caméra.

Les images comprennent une première image 11 de la séquence 1 sur base de laquelle le procédé détermine algorithmiquement, en pas initial (0) de l'étape (ii), une fonction de traitement dont l'image est illustrée en référence 41, fournissant de cette façon une première image segmentée 21. Dans le cas de la figure 1, et de façon non limitative, trois contours de zones sont représentés au niveau de pixels correspondant à la pupille, au limbe et au contour de l'œil.

Cette fonction 41 est obtenue algorithmiquement par un réseau de neurones 5 développé et entraîné au préalable ayant comme données d'entrées les images de la séquence d'images 1 et la séquence 2 comprenant des images segmentées 21, 22, 23, ou de façon équivalente, les fonctions 41, 42, 43 de traitement des images 11, 12, 13, progressivement récursivement déterminées par l'étape (ii) du procédé selon l'invention. En l'occurrence, la séquence 2 est encore vide lors de la détermination de la fonction 41.

Dans une autre étape du procédé, les images 11 et 12 sont comparées pour en déduire un champ de vecteurs 62 correspondant à un déplacement de pixels entre les images, ce champ de vecteurs étant composé avec la fonction 41 pour en déduire une estimation 32 de la fonction de traitement de l'image 12. Tel qu'illustré en figure 1, le champ de vecteurs correspond au déplacement de l'image 11 vers l'image 12 appliqué à l'image de la fonction 41 au-dessus des pixels de l'image 11 pour obtenir une estimation de l'image de la fonction 42. Toutefois, cette illustration a pour but de faire comprendre comme est obtenue l'estimation 32. Le champ de vecteurs 62 correspond en pratique à une déformation non rigide entre les images, et s'applique mathématiquement aux pixels de l'images 12 comme expliqué dans l'exposé de l'invention. Toutes ces données sont cependant équivalentes, comme le comprendra aisément l'homme du métier, la donnée de l'estimation 32 étant en outre équivalente à celle du champ de vecteurs 62 vu que le procédé est récursif.

Cette estimation 32 est ensuite utilisée en donnée d'entrée du réseau de neurones 5, en combinaison avec les séquences d'images 1 et 2 (cette dernière comprenant la seule image segmentée 21 à ce stade ou, de façon équivalente, la fonction 41), pour en déduire une correction de l'estimation 32, et de façon à définir la fonction 42 de traitement de l'image 12.

Ces étapes sont ensuite itérées. Une comparaison entre les images 12 et 13 donnent le champ de vecteurs 63 qui, composé avec la fonction 42, permet d'en déduire une estimation 33 de la fonction 43 de traitement de l'image 13. Cette estimation 63 est alors utilisée en donnée d'entrée par le réseau de neurones 5, en combinaison avec les séquences d'images 1 et 2 (cette dernière comprenant à ce stade les images 21 et 22, ou de façon équivalente les fonctions 41, 42) pour en déduire la fonction 43, et obtenir ainsi l'image segmentée 23. Et ainsi de suite de façon récursive sur la séquence 1 (correspondant aux « ... » illustrés).

En bref, la présente invention concerne un procédé de traitement d'images comprenant une détermination récursive, et préférentiellement algorithmique, de fonctions de traitement d'images 41, 42, 43 pour une séquence d'images 11, 12, 13 sur base d'une séquence d'estimations 32, 33 d'au moins une partie de ces fonctions.

La présente invention a été décrite ci-dessus en relation avec un mode de réalisation préféré et/ou spécifique à valeur purement illustrative et non limitative. De façon générale, il apparaîtra évident pour un homme du métier que la présente invention n'est pas strictement limitée aux exemples illustrés et/ou décrits dans ce texte.

## Revendications

1. Procédé de traitement d'images mis en oeuvre par ordinateur et comprenant une détermination d'une fonction (41, 42, 43) de traitement d'images de chaque image (11, 12, 13) d'une séquence (1) d'images au moyen des étapes suivantes :
(i) déterminer une séquence d'estimations (32, 33) des fonctions (42, 43) de traitement d'au moins une partie des images (12, 13) ;
(ii) déterminer la fonction (41, 42, 43) de traitement de chaque image (11, 12, 13) récursivement sur la séquence (1) d'images, à partir de la séquence d'estimations (32, 33),
de sorte que la détermination d'une fonction de traitement (42, 43) d'une image à traiter (12, 13) qui est au moins deuxième dans la séquence (1) d'images se fait sur base :
- de la séquence d'estimations (32, 33), et
- d'une fonction (41, 42) de traitement d'une image (11, 12) précédant l'image à traiter (12, 13) dans la séquence (1) d'images ;
dans lequel la fonction (41, 42, 43) de traitement d'images définit une segmentation d'images.

2. Procédé selon la revendication 1,
dans lequel l'estimation (32, 33) de la fonction (42, 43) de traitement d'une image courante (12, 13) de la séquence (1) d'images est déterminée à l'étape (i) à partir de :
• l'image courante (12, 13) ;
• une image voisine (11, 12)
précédant ou suivant l'image courante (12, 13) dans la séquence (1) d'images, et
dont la fonction (41, 42) de traitement a été déterminée préalablement ; et
• la fonction (41, 42) de traitement de l'image voisine (11, 12).

3. Procédé selon la revendication 2,
dans lequel l'étape (i) comprend une comparaison entre l'image courante (12, 13) et l'image voisine (11, 12), la comparaison comprenant une détermination d'un champ de vecteurs (62, 63) correspondant en un déplacement de pixels entre l'image courante (12, 13) et l'image voisine (11, 12).

4. Procédé selon la revendication 3,
dans lequel l'estimation (32, 33) de la fonction (42, 43) de traitement de l'image courante (12, 13) est déterminée à l'étape (i) par une composition du champ de vecteurs (62, 63) avec la fonction (41, 42) de traitement de l'image voisine (11, 12).

5. Procédé selon l'une quelconque des revendications 2 à 4,
dans lequel l'estimation (32, 33) de la fonction (42, 43) de traitement de l'image courante (12, 13) est déterminée algorithmiquement à l'étape (i) au moyen d'un filtre de Kalman.

6. Procédé selon l'une des revendications 1 à 5,
dans lequel une exécution des étapes (i) et (ii) débute par une détermination de la fonction (41) de traitement d'une première image (11) de la séquence (1) d'images à partir de données d'entrées comprenant cette première image (11).

7. Procédé selon l'une quelconque des revendications 1 à 6,
dans lequel la fonction de traitement (42, 43) d'une image à traiter (12, 13) qui est au moins deuxième dans la séquence (1) d'images, et dont l'estimation de la fonction (32, 33) de traitement a été déterminée préalablement,
est déterminée algorithmiquement à l'étape (ii) à partir de données d'entrées comprenant :
• l'image à traiter (12, 13) ;
• l'estimation (32, 33) de la fonction (42, 43) de traitement de l'image à traiter (12, 13) ; et
• la fonction (41, 42) de traitement d'une image (11, 12) précédant l'image à traiter (12, 13) dans la séquence (1) d'images.

8. Procédé selon la revendication 7,
dans lequel les données d'entrées comprennent en outre :
• plusieurs des images précédant l'image à traiter (12, 13) dans la séquence (1) d'images ; et/ou
• plusieurs des fonction de traitement des images précédant l'image à traiter (12, 13) dans la séquence (1) d'images.

9. Procédé selon la revendication 7 ou 8,
dans lequel l'étape (ii) est réalisée au moyen d'un réseau de neurones (5) ayant été développé et entraîné préalablement aux étapes (i) et (ii) pour déterminer la fonction (42, 43) de traitement de l'image à traiter (12, 13) à l'étape (ii) à partir des données d'entrées.

10. Méthode de suivi oculaire comprenant les étapes suivantes :
(a) fournir une séquence (1) d'images d'un oeil ;
(b) segmenter les images au moins au voisinage d'une représentation de l'iris de l'œil ;
(c) déterminer une position d'un limbe de l'œil sur base des segmentations des images de l'étape (b) ;
(d) déterminer une position de l'œil sur base de la position du limbe de l'œil déterminé à l'étape (c) ;
dans laquelle l'étape (b) est mise en oeuvre au moyen du procédé selon l'une quelconque des revendications précédentes.

11. Méthode de suivi oculaire selon la revendication 10,
dans laquelle l'étape (c) comprend une détermination d'une caractéristique de position d'une pupille de l'œil sur base des segmentations des images de l'étape (b),
et dans laquelle la position de l'œil est déterminée à l'étape (d) sur base de la caractéristique de position de la pupille de l'œil et de la position du limbe de l'œil déterminées à l'étape (c).

12. Méthode de suivi oculaire selon la revendication 10 ou 11,
dans laquelle l'étape (b) est mise en oeuvre au moyen du procédé selon la revendication 9,
et comprenant, préalablement à l'étape (b),
un procédé d'entraînement du réseau de neurones (5) par rétropropagation d'un gradient d'erreurs au niveau du réseau de neurones (5) sur base d'une séquence d'images tests d'un oeil regardant une cible située à une position prédéterminée sur un écran.

13. Système informatique de traitement de données comprenant des moyens configurés pour mettre en oeuvre le procédé selon l'une quelconque des revendications 1 à 9.

14. Programme d'ordinateur
comprenant des instructions qui,
lorsque le programme d'ordinateur est exécuté par un ordinateur, conduisent celui-ci à mettre en oeuvre le procédé selon l'une quelconque des revendications 1 à 9.

15. Support informatique lisible par un ordinateur et sur lequel est enregistré un programme d'ordinateur selon la revendication 14.

## Patentansprüche

1. Bildverarbeitungsverfahren, das computerimplementiert ist und ein Bestimmen einer Bildverarbeitungsfunktion (41, 42, 43) für jedes Bild (11, 12, 13) einer Bildsequenz (1) mittels der folgenden Schritte umfasst:
(i) Bestimmen einer Schätzsequenz (32, 33) der Verarbeitungsfunktionen (42, 43) mindestens eines Teils der Bilder (12, 13);
(ii) rekursives Bestimmen der Verarbeitungsfunktion (41, 42, 43) jedes Bildes (11, 12, 13) über die Bildsequenz (1) anhand der Schätzsequenz (32, 33),
sodass das Bestimmen einer Verarbeitungsfunktion (42, 43) eines zu verarbeitenden Bildes (12, 13), das mindestens zweites in der Bildsequenz (1) ist, erfolgt auf Grundlage:
- der Schätzsequenz (32, 33), und
- einer Verarbeitungsfunktion (41, 42) eines Bildes (11, 12), das dem zu verarbeitenden Bild (12, 13) in der Bildsequenz (1) vorausgeht;
wobei die Bildverarbeitungsfunktion (41, 42, 43) eine Bildsegmentierung definiert.

2. Verfahren nach Anspruch 1,
wobei die Schätzung (32, 33) der Verarbeitungsfunktion (42, 43) eines aktuellen Bildes (12, 13) der Bildsequenz (1) in Schritt (i) bestimmt wird anhand:
- des aktuellen Bildes (12, 13);
- eines Nachbarbildes (11, 12),
das dem aktuellen Bild (12, 13) in der Bildsequenz (1) vorausgeht oder folgt, und
dessen Verarbeitungsfunktion (41, 42) zuvor bestimmt wurde; und
- der Verarbeitungsfunktion (41, 42) des Nachbarbildes (11, 12).

3. Verfahren nach Anspruch 2,
wobei Schritt (i) einen Vergleich zwischen dem aktuellen Bild (12, 13) und dem Nachbarbild (11, 12) umfasst, wobei der Vergleich ein Bestimmen eines Vektorfeldes (62, 63) umfasst, das einer Pixelverschiebung zwischen dem aktuellen Bild (12, 13) und dem Nachbarbild (11, 12) entspricht.

4. Verfahren nach Anspruch 3,
wobei die Schätzung (32, 33) der Verarbeitungsfunktion (42, 43) des aktuellen Bildes (12, 13) in Schritt (i) durch eine Zusammensetzung des Vektorfeldes (62, 63) mit der Verarbeitungsfunktion (41, 42) des Nachbarbildes (11, 12) bestimmt wird.

5. Verfahren nach einem der Ansprüche 2 bis 4,
wobei die Schätzung (32, 33) der Verarbeitungsfunktion (42, 43) des aktuellen Bildes (12, 13) in Schritt (i) algorithmisch mittels eines Kalman-Filters bestimmt wird.

6. Verfahren nach einem der Ansprüche 1 bis 5,
wobei eine Ausführung der Schritte (i) und (ii) mit einem Bestimmen der Verarbeitungsfunktion (41) eines ersten Bildes (11) der Bildsequenz (1) anhand von Eingangsdaten, die dieses erste Bild (11) umfassen, beginnt.

7. Verfahren nach einem der Ansprüche 1 bis 6,
wobei die Verarbeitungsfunktion (42, 43) eines zu verarbeitenden Bildes (12, 13), das mindestens zweites in der Bildsequenz (1) ist und dessen Schätzung der Verarbeitungsfunktion (32, 33) zuvor bestimmt wurde,
in Schritt (ii) algorithmisch anhand von Eingangsdaten bestimmt wird, welche umfassen:
- das zu verarbeitende Bild (12, 13);
- die Schätzung (32, 33) der Verarbeitungsfunktion (42, 43) des zu verarbeitenden Bildes (12, 13); und
- die Verarbeitungsfunktion (41, 42) eines Bildes (11, 12), das dem zu verarbeitenden Bild (12, 13) in der Bildsequenz (1) vorausgeht.

8. Verfahren nach Anspruch 7,
wobei die Eingangsdaten weiter umfassen:
- mehrere der Bilder, die dem zu verarbeitenden Bild (12, 13) in der Bildsequenz (1) vorausgehen; und/oder
- mehrere der Verarbeitungsfunktionen der Bilder, die dem zu verarbeitenden Bild (12, 13) in der Bildsequenz (1) vorausgehen.

9. Verfahren nach Anspruch 7 oder 8,
wobei Schritt (ii) mittels eines neuronalen Netzwerks (5) ausgeführt wird, das vor den Schritten (i) und (ii) entwickelt und trainiert wurde, um die Verarbeitungsfunktion (42, 43) des zu verarbeitenden Bildes (12, 13) in Schritt (ii) anhand der Eingangsdaten zu bestimmen.

10. Augenverfolgungsverfahren, das die folgenden Schritte umfasst:
(a) Bereitstellen einer Bildsequenz (1) eines Auges;
(b) Segmentieren der Bilder mindestens in der Nähe einer Darstellung der Iris des Auges;
(c) Bestimmen einer Position eines Limbus des Auges auf Grundlage der Segmentierungen der Bilder aus Schritt (b);
(d) Bestimmen einer Position des Auges auf Grundlage der in Schritt (c) bestimmten Position des Limbus des Auges;
wobei Schritt (b) mittels des Verfahrens nach einem der vorstehenden Ansprüche implementiert wird.

11. Augenverfolgungsverfahren nach Anspruch 10,
wobei Schritt (c) ein Bestimmen eines Positionsmerkmals einer Pupille des Auges auf Grundlage der Segmentierungen der Bilder aus Schritt (b) umfasst,
und wobei die Position des Auges in Schritt (d) auf Grundlage des Positionsmerkmals der Pupille des Auges und der Position des Limbus des Auges, die in Schritt (c) bestimmt wurden, bestimmt wird.

12. Augenverfolgungsverfahren nach Anspruch 10 oder 11,
wobei Schritt (b) mittels des Verfahrens nach Anspruch 9 implementiert wird,
und das vor Schritt (b) umfasst
ein Verfahren zum Trainieren des neuronalen Netzwerks (5) durch Rückausbreitung eines Fehlergradienten auf Ebene des neuronalen Netzwerks (5) auf Grundlage einer Sequenz von Testbildern eines Auges, das ein Ziel betrachtet, das sich an einer vorbestimmten Position auf einem Bildschirm befindet.

13. Informationstechnisches Datenverarbeitungssystem, das Mittel umfasst, die so konfiguriert sind, dass sie das Verfahren nach einem der Ansprüche 1 bis 9 implementieren.

14. Computerprogramm, das Anweisungen umfasst, die,
wenn das Computerprogramm von einem Computer ausgeführt wird,
diesen dazu veranlassen, das Verfahren nach einem der Ansprüche 1 bis 9 zu implementieren.

15. Informationstechnischer Träger, der von einem Computer gelesen werden kann und auf dem ein Computerprogramm nach Anspruch 14 aufgezeichnet ist.

## Claims

1. A computer-implemented image processing method comprising a determination of an image processing function (41, 42, 43) of each image (11, 12, 13) of an image sequence (1) by means of the following steps:
(i) determining a sequence of estimates (32, 33) of the processing functions (42, 43) of at least some of the images (12, 13);
(ii) determining the processing function (41, 42, 43) of each image (11, 12, 13) recursively over the sequence (1) of images, on the basis of the sequence of estimates (32, 33),
so that the determination of a processing function (42, 43) of an image to be processed (12, 13) which is at least second in the image sequence (1) is carried out on the basis:
- of the sequence of estimates (32, 33), and
- of a processing function (41, 42) of an image (11, 12) preceding the image to be processed (12, 13) in the image sequence (1);
wherein the image processing function (41, 42, 43) defines an image segmentation.

2. The method according to claim 1,
wherein the estimate (32, 33) of the processing function (42, 43) of a current image (12, 13) of the image sequence (1) is determined in step (i) from:
- the current image (12, 13);
- a neighbouring image (11, 12) preceding or following the current image (12, 13) in the image sequence (1), and whose processing function (41, 42) has been determined beforehand; and
- the processing function (41, 42) of the neighbouring image (11, 12).

3. The method according to claim 2,
wherein step (i) comprises a comparison between the current image (12, 13) and the neighbouring image (11, 12), the comparison comprising a determination of a vector field (62, 63) corresponding to a displacement of pixels between the current image (12, 13) and the neighbouring image (11, 12).

4. The method according to claim 3,
wherein the estimate (32, 33) of the processing function (42, 43) of the current image (12, 13) is determined in step (i) by a composition of the vector field (62, 63) with the processing function (41, 42) of the neighbouring image (11, 12).

5. The method according to any one of claims 2 to 4,
wherein the estimate (32, 33) of the processing function (42, 43) of the current image (12, 13) is algorithmically determined in step (i) by means of a Kalman filter.

6. The method according to any one of claims 1 to 5,
wherein an execution of steps (i) and (ii) begins with a determination of the processing function (41) of a first image (11) of the image sequence (1) from input data comprising this first image (11).

7. The method according to any one of claims 1 to 6,
wherein the processing function (42, 43) of an image to be processed (12, 13) which is at least second in the image sequence (1), and whose processing function estimate (32, 33) has been determined beforehand, is determined algorithmically in step (ii) from input data comprising:
- the image to be processed (12, 13);
- the estimate (32, 33) of the processing function (42, 43) of the image to be processed (12, 13); and
- the processing function (41, 42) of an image (11, 12) preceding the image to be processed (12, 13) in the image sequence (1).

8. The method according to claim 7,
wherein the input data further comprises:
- several of the images preceding the image to be processed (12, 13) in the image sequence (1); and/or
- several of the processing functions of images preceding the image to be processed (12, 13) in the image sequence (1).

9. The method according to claim 7 or 8,
wherein step (ii) is carried out by means of a neural network (5) which has been developed and trained prior to steps (i) and (ii) in order to determine the processing function (42, 43) of the image to be processed (12, 13) at step (ii) on the basis of the input data.

10. An eye-tracking method comprising the following steps:
(a) providing a sequence (1) of images of an eye;
(b) segmenting the images at least in the vicinity of a representation of the iris of the eye;
(c) determining the position of a limbus of the eye on the basis of the segmentations of the images of step (b);
(d) determining a position of the eye on the basis of the position of the limbus of the eye determined at step (c);
in which step (b) is implemented by means of the method according to any one of the preceding claims.

11. The eye-tracking method of claim 10,
wherein step (c) comprises determining a position characteristic of a pupil of the eye on the basis of the segmentations of the images of step (b),
and wherein the position of the eye is determined at step (d) on the basis of the position characteristic of the pupil of the eye and of the position of the limbus of the eye determined at step (c).

12. The eye-tracking method according to claim 10 or 11,
wherein step (b) is implemented by the method of claim 9,
and comprising, prior to step (b),
a method for training the neural network (5) by back-propagating an error gradient at the level of the neural network (5) on the basis of a sequence of test images of an eye looking at a target located at a predetermined position on a screen.

13. A data processing computer system comprising means configured to implement the method according to any one of claims 1 to 9.

14. A computer program comprising instructions that, when the computer programme is executed by a computer, lead the latter to implement the method according to any one of claims 1 to 9.

15. A computer-readable medium on which a computer program according to claim 14 is recorded.
